# EUROPEAN PATENT SPECIFICATION

(11) **EP 4 230 944 B1**
(45) Date of publication and mention of the grant of the patent: **07.05.2025**
(21) Application number: 23156293.5
(22) Date of filing: 13.02.2023
(51) Int. Cl.: F28D 7/16, F28F 9/26, F28F 9/22, F28F 9/02, F28D 7/06, F28D 7/00

(54) **HEAT EXCHANGER MODULE, METHOD FOR MANUFACTURING SUCH A MODULE AND TUBULAR HEAT EXCHANGER COMPRISING SUCH MODULES**
WÄRMETAUSCHERMODUL, VERFAHREN ZUR HERSTELLUNG SOLCH EINES MODULS UND ROHRFÖRMIGER WÄRMETAUSCHER MIT SOLCHEN MODULEN
MODULE D'ÉCHANGEUR DE CHALEUR, PROCÉDÉ DE FABRICATION D'UN TEL MODULE ET ÉCHANGEUR DE CHALEUR TUBULAIRE COMPRENANT DE TELS MODULES

(30) Priority: 17.02.2022 EP 22157167
(43) Date of publication of application: 23.08.2023
(73) Proprietor: Bosal Flanders NV, 3560 Lummen (BE)
(72) Inventor: DE VOS, Yves, 1980 Zemst (BE); TAMSIN, Kristof, 3210 Lubbeek (BE)
(74) Representative: Bohest AG

(56) References cited:
- GB-A- 2 394 038
- US-A- 3 841 271
- US-A- 4 036 293
- US-A- 5 318 110
- US-A1- 2017 044 983
- US-A1- 2017 205 157

## Description

The invention relates to a heat exchanger module for use in high pressure applications and for use in the construction of a tubular heat exchanger. The invention also relates to a tubular heat exchanger comprising a plurality of heat exchanger modules as well as to a method for manufacturing such heat exchanger modules.

In so-called shell-and-tube heat exchangers, for guiding one of the fluids tubes are arranged close to each other in a housing. The tubes may be U-tubes extending into a fluid collector. These collectors typically include plates and box-like shapes including several, typically long longitudinal, weld connections. Due to their construction, these devices are either massively built or not suitable for high pressure applications up to several hundred bar. For example, in the European patent application EP3170541A1, heat exchanger modules comprising a nested U-tube arrangement is shown. However, these modules are suitable for applications with a fluid pressure well below hundred bar. US 3 841 271 A discloses a tube-bundle heat exchanger according to the preamble of claim 1.

Therefore, there is a need for a heat exchanger module and a tubular heat exchanger comprising such modules suitable for high pressure applications, in particular for pressure applications up to several hundred bar fluid pressure.

According to the invention, there is provided a heat exchanger module comprising several U-tubes for a first fluid flow, typically a pressurized fluid flow. The U-tubes have two straight sections connected by a U-shaped portion. Inlet ends of the several U-tubes are connected with an inlet collector tube and outlet ends of the several U-tubes are connected with an outlet collector tube.

Due to its construction, in particular using tubes as fluid collectors, the heat exchanger module is adapted and suitable for high pressure applications, for example pressure applications up to a maximum of 500 bar. It has been found that in particular heat exchanger modules for pressure applications up to 500 bar at temperatures between 400 degree Celsius and 700 degree Celsius, or even up to 1000 degree Celsius, may be manufactured with low cost and weight.

Tubes have an intrinsic stability due to their circular cross section. In addition, tubes are generally manufactured in one piece, such that no welds need be present forming the collectors and making high pressure applications unavailable.

The U-tubes may be connected with the collector tubes in any suitable way and by any suitable means providing a fluid connection between the interior of the U-tubes and the interior of the collectors. For example, the U-tubes, respectively their inlet ends and outlet ends may be directly attached to the respective collector tubes.

Preferably, some or all ends of the U-tubes are embedded in tube walls of the inlet collector tube or outlet collector tube or in both the inlet collector tube and outlet collector tube.

Preferably, the inlet ends of the U-tubes are embedded in a tube wall of the inlet collector tube and outlet ends of the U-tubes are embedded in a tube wall of the outlet collector tube. This provides the advantage that the U-tubes and collectors may be positioned relative to each other. They may also at least partially be fixed to each other by a form-fit of the ends of the U-tubes and passages in the tube walls of the collector tubes.

Preferably, the inlet ends or the outlet ends of the U-tubes are connected with the tube wall of the respective collector tube over an entire wall thickness of the respective tube wall. More preferably, both, inlet ends and outlet ends are connected with the respective collector tubes over the entire tube wall of the respective inlet and outlet collector tube. Depending on a thickness of a tube wall, a connection between U-tubes and collector tubes generally extends over more than ten millimeters, for example up to 20 millimeters. This not only enhances stability of a joint to stand high forces or pressure but has also a favorable effect on leak tightness.

A tube wall thickness of inlet and outlet collector tube may be chosen and adapted, for example, to a pressure of a fluid the module is used with, tube materials or cost and space constraints. Tube wall thicknesses of inlet and outlet collector tubes are preferably in a range between 6 millimeters and 20 millimeters, more preferably in a range between 8 millimeters and 16 millimeters, for example between 10 millimeters and 15 millimeters.

In preferred embodiments, the tube wall of the inlet collector tube or the tube wall of the outlet collector tube is provided with through passages in the tube wall. The inlet ends or outlet ends of the U-tubes are arranged in the through passages, preferably drill holes or laser-cut holes. More preferably, the tube wall of the inlet collector tube and the tube wall of the outlet collector tube is provided with through passages. Thus, the inlet ends and the outlet ends of the U-tubes are arranged in the through passages.

Providing through passages in a tube wall bears the advantage that a collector tube as such may be provided as and remains a stable one-piece part. Passages for the fluid flow or for the U-tubes, respectively, may be provided only where required. Preferably, there are as many through passages in a tube wall of a collector tube as there are U-tubes to be connected to the collector tube.

While connections between metallic parts may typically be realized by welding, soldering or brazing, for elevated temperature and elevated pressure applications, such connections are realized by welding or brazing.

In the heat exchanger module, connections between U-tubes and collectors are preferably realized by brazing, for example vacuum brazing or diffusion bonding (also known as diffusion welding), but also by welding. In particular vacuum brazing with nickel-based brazing material allows to manufacture extremely stable and robust heat exchanger modules, which are suitable for applications in the mentioned high pressure and high temperature ranges.

Preferably, at least one of the inlet ends of the U-tubes or the outlet ends of the U-tubes comprises a brazed joint with the respective collector tube. More preferably, several inlet ends, most preferably, all inlet ends comprise a brazed joint with the inlet collector tube. More preferably, several outlet ends, most preferably, all outlet ends comprise a brazed joint with the outlet collector tube. By brazing, a length of a joint may be manufactured that extends over an entire wall thickness of the collector tube. Depending on the relative position of an inlet end or outlet end of a U-tube and a collector tube, joints may be manufactured that are even longer than a tube wall thickness.

Manufacturing brazing joints may be performed in a very efficient way and providing very stable connections. This will be described in more detail further below when referring to a method of manufacturing the heat exchanger modules according to the invention.

In the heat exchanger module, a longitudinal axis of the inlet collector tube and a longitudinal axis of the outlet collector tube are preferably arranged parallel to each other.

Preferably, a longitudinal axis of the straight sections of the U-tubes is arranged perpendicular to a longitudinal axis of an inlet collector tube or outlet collector tube.

An end of the inlet collector tube or an end of the outlet collector tube is closed, preferably, an end of the inlet collector tube and an end of the outlet collector tube is closed. Preferably, closed ends of inlet and outlet collector tubes are arranged on a same side of the heat exchanger module.

A closed end of the collector tubes may be realized, for example, by the provision of a bottom plate or similar. Such a bottom plate may be connected with the tube wall, for example by welding, brazing or by deep drawing of the collector tube including bottom wall. A closed end, in particular a bottom plate, may be plane or have a concave shape. A concave shape of a bottom wall may withstand elevated pressure compared to a plane shape and is known, for example from champagne bottles.

Inner and outer diameter of inlet collector tubes may be different or may be the same as inner and outer diameter of outlet collector tubes. Preferably, inner and outer diameters of an inlet collector tube and an outlet collector tube are the same. Preferably, inlet collector tube and outlet collector tube are identical with respect to size and material. This may simplify manufacture and construction of the collector tubes as well as of heat exchanger modules.

Preferably, the several U-tubes are arranged in a regular array in the heat exchange module. Preferably, the U-tubes are provided in nested arrangement, for example provided in rows, wherein the U-tubes of neighbouring rows are displaced versus each other.

Preferably, the inlet ends of the several U-tubes and the outlet ends of the several U-tubes are arranged in one or more rows, preferably linear rows. Preferably, the inlet ends of the several U-tubes and the outlet ends of the several U-tubes are each arranged in two to eight rows, preferably, in four to six rows. Preferably, the rows are equidistantly arranged to each other. Preferably, the one or more rows extend along a longitudinal direction of the collector tubes. Preferably, the one or more rows are arranged parallel to the longitudinal axis of the collector tube.

Preferably, the through passages for the inlet and outlet ends of the U-tubes and accordingly the inlet and outlet ends of the U-tubes are arranged in one half only of the collector tubes. Preferably, they are arranged in or extend over a maximum of a quarter of a circumference of a collector tube.

Preferably, the several U-tubes of a heat exchanger module are arranged parallel to each other, preferably equidistantly and preferably in one row.

A number of U-tubes in a heat exchanger module may be chosen and adapted to a user's need, cost or power requirement, space constraints etc. of the heat exchanger to manufactured from the heat exchanger modules.

A heat exchanger module may, for example, comprise between 20 and 500 U-tubes, preferably between 60 and 300 U-tubes, more preferably between 120 and 250 U-tubes, for example between 140 and 180 U-tubes.

A heat exchanger module may, for example, comprise between 2 to 6, preferably nested, rows, each row comprising between 10 and 80 U-tubes, preferably between 3 to 5 rows, each row comprising between 20 and 60 U-tubes, more preferably between 4 to 5 rows, each row comprising between 30 and 50 U-tubes, for example four rows, each row between 35 and 45 U-tubes.

Under a 'nested arrangement of U-tubes' an arrangement of tubes is understood, wherein more than one row of U-tubes is arranged next to each other, wherein U-tubes of each row have a different bending radius and overall length, so that a row of U-tubes with small bending radius and length is at a closest possible distance to a row of U-tubes having larger bending radius and length.

The shape of the U-tubes of a heat exchanger module may be adapted to their position in the module. For example, if a U-tube is arranged in a more internal inner portion of the heat exchanger module or in a more external outer portion of the heat exchanger module, radii and sizes of U-shaped portions of the U-tubes, but also diameters are adapted accordingly.

In preferred embodiments of the heat exchanger module, the U-shaped portion of the several U-tubes have at least one of a different bend radius, a different size or a different diameter.

In the heat exchanger module, the two straight sections of the U-tubes have a different length. Different length of straight sections is advantageous as it allows for a more compact arrangement of the collector tubes and thus to a more compact design of the heat exchanger module. Preferably, all inlet straight sections of all U-tubes of a module have a same length and all outlet straight sections of all U-tubes of a module have a same length but different to the length of the inlet straight sections. This means that inlet collector tube and outlet collector tube are arranged at different heights with respect to the lengths of the two straight sections of the U-tubes. Accordingly, the two collector tubes may be positioned closer together compared to an exact parallel and inline positioning of two tubes allowing for a smaller set-up of the module. In particular, the longitudinal axis of the inlet and outlet collector tubes are arranged at different heights with respect to the length of the two straight sections and with respect to the height of the heat exchanger module, respectively.

A length of the outlet straight section of a U-tube may, for example, be between 70 percent and 100 percent of the length of the inlet straight section of a U-tube, more preferably between 75 percent and 95 percent, for example between 70 percent and 85 percent. Or vice versa, a length of an inlet straight section of a U-tube may, for example, be between 70 percent and 100 percent of the length of the outlet straight section of a U-tube, more preferably between 75 percent and 95 percent, for example between 70 percent and 85 percent. The heat exchanger module may further comprise fins, preferably longitudinal fins, arranged on an outside of the U-shaped tubes for guiding a second fluid flow in the direction of the fins along the outside of the heat exchanger module. Preferably, the fins are arranged parallel or perpendicular to a longitudinal axis of an inlet collector tube or outlet collector tube or both, arranged parallel and perpendicular to a longitudinal axis of the collector tubes.

Fins are provided to give the second flow that passes the U-tubes of the heat exchanger module on their outside some guidance, preferably to prevent a second flow to accumulate on a side of the heat exchanger module, for example on a top side or a bottom side. Preferably fins are longitudinal fins preferably extending over about an entire length of a heat exchanger module. Fins, for example arranged on a small side of a heat exchanger module, may interact with fins of neighbouring heat exchanger modules and form fins extending over some or all heat exchanger modules arranged in a tubular heat exchanger comprising a plurality of heat exchanger modules.

According to the invention, there is also provided a method for manufacturing a heat exchanger module according to the invention and as described herein. The method comprises providing a plurality of U-tubes and providing an inlet collector tube and an outlet collector tube with through passages in a tube wall of the inlet collector tube and with through passages in a tube wall of the outlet collector tube. The method further comprises accommodating inlet ends and outlet ends of the U-tubes in the through passages in the respective tube walls of the inlet collector tube and the outlet collector tube and connecting the inlet ends of the U-tubes to the inlet collector tube and connecting the outlet ends of the U-tubes with the outlet collector tube in a fluid tight manner, thereby forming a heat exchanger module.

The method further comprises applying brazing paste in the region of the through passages and heating the heat exchanger module above a melting temperature of the brazing paste, letting the brazing paste enter the through passages, thereby forming a brazed joint between the ends of the U-tubes and the respective collector tubes.

Through heating of the assembled module provide with brazing paste, the molten brazing paste enters the interstitial spaces between through passage and outer circumference of the ends of the U-tubes. The heating may be performed by putting the assembled U-tubes and collector tubes in a furnace. This allows to manufacture all U-tube connections in one step. No separate welding of individual connections is required. In addition, due to capillary forces, brazing paste enters the interstitial space between through passage and outer circumference of the ends of the U-tubes basically over the entire length of the through passages. By this, a very stable brazing joint may be formed, that preferably extends over the entire length of the through passage, which length corresponds to at least the thickness of the tube wall of a collector tube.

The brazing may be done, for example, in a vacuum furnace for vacuum brazing the U-tubes and collector tubes. It may also be done by diffusion bonding, wherein part of the brazing paste diffuses in the material of the tubes, in particular steel of the U-tubes and collectors. This may further improve a bond.

A brazing paste may be applied to the region of the through passages on the inside of the collector tubes or to the region of the through passages on the outside of the collector tubes. A brazing paste may also be applied to the region of the through passages to the inside and outside of the collector tubes.

Preferably, the heat exchanger module is heated in a vacuum furnace for connecting the connections between U-tubes and collector tubes. Preferably, the heat exchanger module is heated in a vacuum furnace for brazing, most preferably for brazing with a nickel-based brazing paste.

A material used for connecting individual parts of the heat exchanger module must be able to stand future operation temperatures of the heat exchanger module. For example, a brazing paste used for brazing connections of the heat exchanger module must in some embodiments be able to stand temperatures of up to 1000 degree Celsius. Thus, a Nickel-based brazing paste must be heated above 1000 degree Celsius to melt. Under such high temperature conditions oxidation of the materials involved occurs. Performing the brazing under vacuum may prevent or limit oxidation. By this potential degradation of the materials may be prevented and make the connections of the heat exchanger module stable also under high pressure and high temperature applications.

The method may comprise drilling or laser-cutting the through passages in the tube walls of the inlet collector tube and the outlet collector tube. Preferably, a same number of through passages are provided in a collector tube than a number of U-tubes are connected with the collector tubes.

Preferably, the method comprises providing a plurality of U-tubes in a nested arrangement, wherein inlet ends and outlet ends are arranged in parallel rows.

According to yet another aspect of the invention, there is provided a tubular heat exchanger. The tubular heat exchanger comprises a housing with a first fluid inlet and a second fluid inlet and a first fluid outlet and a second fluid outlet, wherein a plurality of heat exchanger modules according to the invention and as described herein are arranged in the housing. The plurality of heat exchanger modules are connected with each other, wherein the modules may be connected in series or in parallel or both in series and in parallel.

The first inlet of the tubular heat exchanger is connected with an inlet collector tube of a first heat exchanger module of the plurality of heat exchanger modules and the first outlet is connected with an outlet collector tube of a last heat exchanger module of the plurality of heat exchanger modules. The inlet collector tube may also be connected to inlet collector tubes of several first heat exchanger modules. For example, if the plurality of heat exchanger modules is arranged in two or more rows, the first inlet may be connected to two or more first heat exchanger modules, one of each row. Accordingly, the first outlet may be connected with two or more last outlet collector tubes of heat exchanger modules.

Depending on a desired power range or duty of the tubular heat exchanger, more or fewer heat exchanger modules may be provided in a housing. A plurality of heat exchanger modules accommodated in a housing of a tubular heat exchanger may, for example, comprise 2 to 100 modules, preferably 4 to 80 modules, such as, for example, 8 to 40 modules.

For example, 2, 6, 8, 12 or 20 modules may be arranged in series and in one row. The heat exchangers may, for example be arranged in two parallel rows in a housing, adding up to 4, 12, 16, 24 or 40 modules in total.

Preferably, the plurality of heat exchanger modules is arranged in the housing in two or more parallel rows. Preferably, a first fluid inlet comprises a flow splitter, which flow splitter is connected with an inlet collector tube of a first heat exchanger module in each row of heat exchanger modules. By this, a first fluid, for example a pressurized supercritical fluid, is divided and distributed over the number of parallel rows of serially connected heat exchanger modules in the heat exchanger.

Preferably, the housing of the tubular heat exchanger is elongate having a longitudinal axis. Preferably, longitudinal axes of inlet collector tubes of the heat exchanger modules are arranged perpendicular to the longitudinal axis of the housing. In this arrangement a main first fluid flow flowing through the tubular heat exchanger is perpendicular to the first fluid flow in the collector tubes.

Preferably, the longitudinal axes of straight sections of U-tubes of the heat exchanger modules are arranged perpendicular to the longitudinal axis of the housing. In this arrangement a main first fluid flow flowing through the tubular heat exchanger is perpendicular to the first fluid flow flowing through the U-tubes.

The heat exchanger modules and the tubular heat exchanger are designed for use with pressurized fluid, such as for example a supercritical fluid, such as supercritical water or supercritical CO₂ or with organic fluids, such as, for example, oil.

The heat exchanger modules and the tubular heat exchanger stand pressures of the pressurized fluid up to 500 bar. Preferred pressures range between 50 bar and 500 bar, more preferred between 60 bar and 350 bar, for example between 85 bar and 280 bar.

The second fluid preferably has a low pressure, for example between 1 to 20 bar. The second fluid is a heat exchanger fluid, which is heated up by heat transfer from the first pressurized fluid to the second fluid. The second fluid may, for example, be thermal oil, for example silicone thermal oil or hot gas. Silicon oil may, for example, be in a pressure range of about 15 bar. The second fluid may also be used to cool down the first pressurized fluid, for example using cooling water. Water may, for example, be at atmospheric pressure or up to, for example, 8 bar.

An operation temperature range of the heat exchanger module and the tubular heat exchanger may be between 200 degree Celsius and 1000 degree Celsius and is preferably between 250 degree Celsius and 750 degree Celsius. This temperature refers to the temperature of the first fluid, preferably measured at the inlet of the heat exchanger module or at the inlet of a heat exchanger, respectively.

A tubular heat exchanger according to the invention is typically used in megawatt power applications, for example between 0.5MW and 40 MW, preferably, between 0.5MW and 25MW, or between 1MW and 20MW, for example between 1MW to 15MW.

The heat exchanger module and tubular heat exchanger are adapted for high mass flows. A mass flow of a first, pressurized fluid, may, for example, be in a range between 5kg/s and 80kg/s, preferably in a range between 10kg/s and 60kg/s, for example between 15kg/s and 30kg/s.

With the present invention, heat exchanger modules may be manufactured using vacuum brazing in a vacuum furnace, preferably with high temperature brazing material, such as for example nickel-based brazing material. They are as such suitable for applications up to 500 bar and temperatures up to 1000 degree Celsius. These modules may then be combined to form a heat exchanger of, for example, 10MW to 40MW heat exchange. The connection of the modules is preferably performed outside of the vacuum furnace, for example by welding.

Vacuum furnaces, in particular for vacuum brazing a heat exchanger module, have limited dimensions. It is technically not feasible to heat a vacuum volume of 10 to 20 cubic meters. Accordingly, large prior art heat exchangers cannot be vacuum brazed and as such are not suitable for high temperature, high pressure applications in the above given pressure and temperature ranges. Due to the individual manufacture of mechanically and thermally stable heat exchanger modules, also heat exchangers in the Megawatt range may be manufactured that are suitable for high temperature and high pressure applications.

In addition, the modularity of the heat exchanger of the present invention allows for serial production of the individual modules, which is advantageous in cost and time.

Further features and advantages of the method and tubular heat exchanger have been described relating to the heat exchanger module and are applicable also to the method and heat exchanger.

The invention is further described with regard to embodiments, which are illustrated by means of the following drawings, wherein:
- Fig. 1: shows a perspective view of a heat exchanger module;
- Fig. 2: a partial view of the heat exchanger module of Fig. 1;
- Fig. 3: two combined heat exchanger modules;
- Fig. 4: shows a perspective view of a tubular heat exchanger;
- Fig. 5,6: are a longitudinal cross-sectional view (Fig. 5) and a transverse cross-sectional view (Fig. 6) of the tubular heat exchanger of Fig. 4;
- Fig. 7: shows a series of heat exchanger modules.

In the drawings, the same reference signs are used for the same or similar elements.

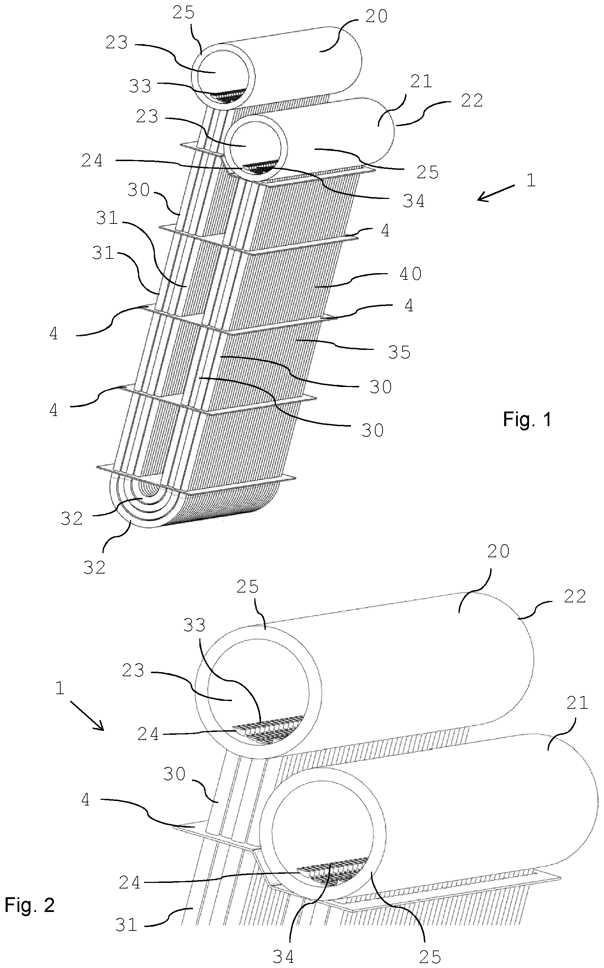

**Fig. 1** shows a heat exchanger module 1 comprising an inlet collector tube 20 and an outlet collector tube 21. Both collector tubes 20, 21 have a circular cross section and an exemplary tube wall 25 thickness of about 8mm to 20mm. In a preferred embodiment, an outer diameter of the collector tubes is 125 mm and an inner diameter is 100 mm inner diameter, thus the tube wall thickness amounts to 12.5 mm.

The inlet collector tube 20 and outlet collector tube 21 comprise an open end 23 facing to the front in Fig. 1. The inlet and outlet collector tubes 20,21 may comprise a closed opposite end 22 (not shown) if used as single module or possibly in serial arrangement with other heat exchanger modules. In other embodiments, the opposite end 22 may be open and for example attached to, in particular welded, to another inlet collector tube of another heat exchanger module. A pressurized first fluid may then transfer into the adjacent inlet collector tube and adjacent module.

As may be seen in more detail in **Fig. 2** showing a partial view of the heat exchanger module of Fig. 1, four times 40 U-tubes 30 are fluidly connected with the interior of the collector tubes 20,21 via the tube walls 25 of the collector tubes 20,21.

The collector tubes 20,21 each comprise four rows of 40 through holes 24 in their tube walls 25. All four rows are arranged in a lower half of the collector tubes. The four rows are arranged parallel to each other and along the length of the collector tubes 20,21 parallel to the longitudinal axis of the collector tubes. Through holes 24 in neighbouring rows are displaced by half the distance between through holes in a same row. This positioning allows for a nested arrangement of U-tubes with a distance between through holes of a few millimeter, for example 0.5 millimeter to 10 millimeter, and thus a very compact U-tube arrangement. An exemplary diameter of a through hole is 13 millimeter having a shortest distance to neighbouring through holes of 2 millimeter.

The U-tubes 30 comprise two straight sections 31,35 and a U-shaped portion 32 connecting the two straight sections to form the U-tubes 30. The inlet ends 33 of the U-tubes and the outlet ends 34 of the U-tubes are arranged in the through holes 24 and are brazed to the tube walls 25.

The through holes 24 are preferably drill holes or laser-cut holes, and drilled or cut into the tube walls 25 before inserting the ends 33,34 of the U-tubes 30 into the through holes 24.

Preferably, the inlet ends and outlet ends 33,34 of the U-tubes form a brazed joint with the tube walls 25 of the inlet and outlet collectors 20,21. This is preferably realized by vacuum brazing or diffusion bonding.

A length of a joint extends over an entire wall thickness of the collector tubes 20,21, for example if the inlet ends 33 or outlet ends 34 are arranged exactly perpendicular to the circumference of the tube walls 25. In more externally arranged U-tubes 30 and more internally arranged U-tubes 30 joints may be manufactured that ere even longer than the tube wall thickness.

The straight sections 31,35 of a U-tube have a different length. In Fig. 1 all inlet straight sections 31 of all U-tubes are longer than their respective outlet straight sections 35. By this, the inlet collector tube 20 in Fig. 1 may be arranged at a different height than the outlet collector tube 21 when seen over a height of the heat exchanger module 1. This allows to place inlet and outlet collector tubes 20,21 closer together in a width direction of the module and make the heat exchanger module 1 very compact. In the embodiment shown in Fig. 1 a length of the inlet straight sections 31 is, for example, between 80 cm to 90 cm, while a length of the outlet straight sections 35 is, for example, between 70 cm to 80 cm with an outer diameter of the U-tubes in a range between 10 mm and 15 mm. In another embodiment, a length of the inlet straight sections 31 is, for example, between 2 m and 2.5 m, while a length of the outlet straight sections 35 is, for example, between 1.8 m and 2.3 m with an outer diameter of the U-tubes in a range between 20 mm and 30 mm.

In Fig. 1 it may be seen that U-tubes in an interior portion of the heat exchanger module 1 are smaller in height and width than U-tubes in an exterior outer portion of the heat exchanger module 1. The height of a U-tube is mainly defined by a length of the straight sections 31,35 of a U-tube. A width of a U-tube is defined by the size of the U-shaped portion.

Five longitudinal fins 4 in the form of strips are arranged on the outside of the U-tubes. The fins 4 extend parallel to the longitudinal axis of the collector tubes 20,21 and are provided for guiding a second fluid flow, which second fluid flow flows around the heat exchanger module 1. The second fluid flow absorbs heat from a first highly pressurized fluid flow flowing in and through the collector tubes 20,21 and U-tubes 30. The preferably equidistantly arranged fins 4 separate the outsides of the U-tubes into four to five sections, each section intended to guide about 25 percent or 12.5 percent of the total flow of the second fluid passing that side of the heat exchanger module 1.

In the example of Fig. 1 and Fig. 2, the fins on each of the four sides of the heat exchanger module 1 are embodied as plate of a sheet material, for example steel plate. One plate forms guiding fins on the outside and in the inside of the heat exchanger module 1, wherein these fins are connected and preferably made in one piece. The plate extends in between the straight sections 31,35 of the U-tubes 30.

The module as shown in Figs. 1 and 2 may be vacuum brazed in a vacuum furnace. Exemplary sizes of a vacuum furnace are from 250mm up to 2000mm (diameter or extension), for example 700x650x300, 600x900x600, 1200x2000x1200, or (diameter) 250x340, (diameter)1500×1500. Preferred materials of a vacuum furnace are graphite or molybdenum. Preferred materials for brazing are Nickel or Chromium-Nickel containing brazing pastes, which require furnace temperatures above 1000°C, for example 1100 to 1200°C. Typical vacuum in a vacuum furnace is 10⁻³ to 10⁻⁴ mbar.

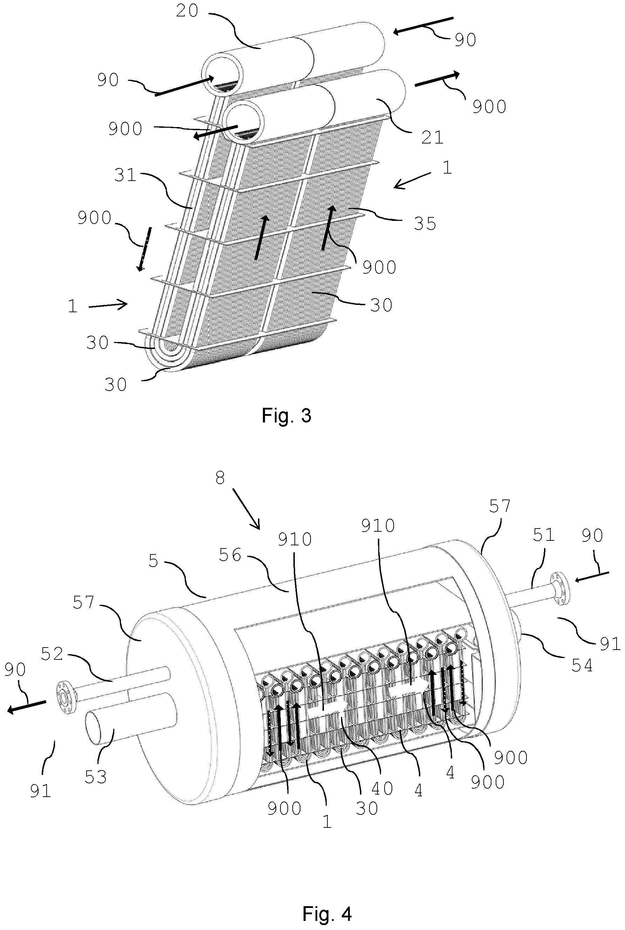

**Fig. 3** shows two heat exchanger modules 1 of Fig. 1 aligned and connected together. The inlet and outlet collector tubes 20,21 are fixed to each other, for example by welding.

A first fluid flow 90 is indicated by arrows 900 for the first fluid flow within the heat exchanger modules 1. The first fluid flow 90 is guided into the inlet collector tubes 20 from both sides. There, the first fluid flow flows perpendicular to the longitudinal axis of the inlet collector tubes 20 through the U-tubes 30 of the heat exchanger modules 1. Arrows 900 in dotted bold indicate an inlet flow in the U-tubes and in bold indicate an outlet flow in the U-tubes 30.

It is also possible to guide the fluid from one side only into the inlet collector tubes 20 and to collect all first fluid from one outlet collector tube 21 only.

The collector tubes and U-tubes are made from a suitable metal, preferably, steel, more preferably stainless steel.

**Fig. 4** shows a tubular heat exchanger 8. In the housing 5 two rows of 12 heat exchanger modules 1, for example the heat exchanger modules according to Fig. 1 are arranged in parallel (only front row visible), for example in a coupled arrangement as shown in Fig. 3. The open ends 23 of the collector tubes 20,21 are connected with open ends of neighbouring collector tubes. Therein, an outlet collector tube 21 is connected with an inlet collector tube 20 of the neighbouring heat exchanger module 1 via connectors (not shown).

The housing 5 comprises a first inlet 51 and a first outlet 52 for a first high pressurized fluid 90 to enter the housing at the first inlet 51, pass the heat exchanger modules 1 through the collector tubes 20,21 and U-tubes 30 and leave the housing via first outlet 52.

The housing 5 comprises a second inlet 53 and a second outlet 54 for a second not or only low pressurized fluid 91 to enter the housing at the second inlet 53, pass the heat exchanger modules 1 on their outside and leave the housing via second outlet 52.

The housing 5 has a tubular shape with a tubular side wall 56 having a circular cross section and slightly convex shaped end walls 57. The first inlet 51 and second outlet 54 are arranged in one of the side walls 57 and the second inlet 53 and first outlet 52 are arranged in the opposite side wall 56. By this the first fluid flow 90 and the second fluid flow 91 pass the tubular heat exchanger in a main co-flow manner but in counter direction.

The second inlet and second outlet 53,54 are arranged in the center of the side walls 57. The first inlet and first outlet 51,52 are arranged displaced to a lateral side of the housing 5.

The fluid flow within the housing 5 is indicated by arrows 910 for the second fluid flow 91. The second fluid flow 91 flows parallel to the longitudinal axis of the housing 5 essentially in a linear manner from the second inlet 53 to the second outlet 54 of the housing 5.

The fluid flow within the housing 5 is indicated by arrows 900 for the first fluid flow 90. The first fluid flow 90 is guided into the inlet collector tube 20 of a first heat exchanger module in a row. There, the first fluid flow flows perpendicular to the longitudinal axis of the housing 5 through the U-tubes 30 of the heat exchanger modules 1. In the last heat exchanger module 1 in a row, the first fluid flow 90 is collected in the outlet collector tube 21 and leaves the heat exchanger via first outlet 52. Again, arrows 900 in dotted bold indicate an inlet flow in the U-tubes and in bold indicate an outlet flow in the U-tubes 30.

On, the front side of the heat exchanger module assembly five fins 4 may be seen extending in the longitudinal direction of the housing 5 and parallel to the second flow direction 910. The fins 4 divide the space along the height of the U-tubes 30 in sections 40. The second flow 91 remains in these sections 40 and a flow deviation into the direction of the collector tubes 20,21 or the U-shaped portions 32 of the U-tubes may be limited or prevented.

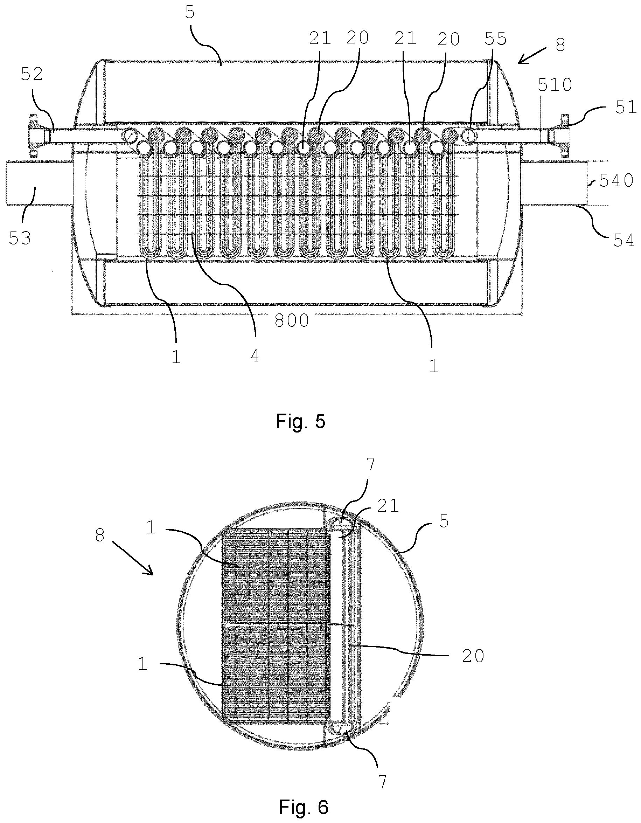

**Fig. 5** and **Fig. 6** show a longitudinal and a transversal cross-sectional view of the heat exchanger 8 of Fig. 4.

Two times twelve modules, for example as in Fig. 1, or 12 combined modules as shown in Fig. 3, are arranged in series in the housing 8. The housing 5 has a length 800 of about 3040mm (3640mm including first inlet 51 and outlet 52) and a diameter of about 1700mm.

The first inlet 52 and first outlet 51 are arranged in one line and on a same height with respect to a height of the heat exchanger and parallel and distanced to the second inlet and outlet 53,54. The second inlet 53 and second outlet 54 are arranged on the central axis of the housing 5.

The first inlet flow 90 entering the heat each exchanger 8 by the first inlet 51 is distributed via flow splitter 55 to the inlet collector tube 20 of the first heat exchanger modules 1 of each of the two rows of modules or to the two opposite ends of combined inlet collector tubes, respectively.

An inner diameter 510 of first inlet and outlet 51,52 is about 100 mm.

An outer diameter 540 of second inlet and outlet 53,54 is about 300mm.

In the transverse view in Fig. 6, the two rows of modules 1 are depicted one above the other. Neighbouring inlet collector tubes 20 and outlet collector tubes 21 are connected with each other by respective end connectors 7 connecting their open ends 23.

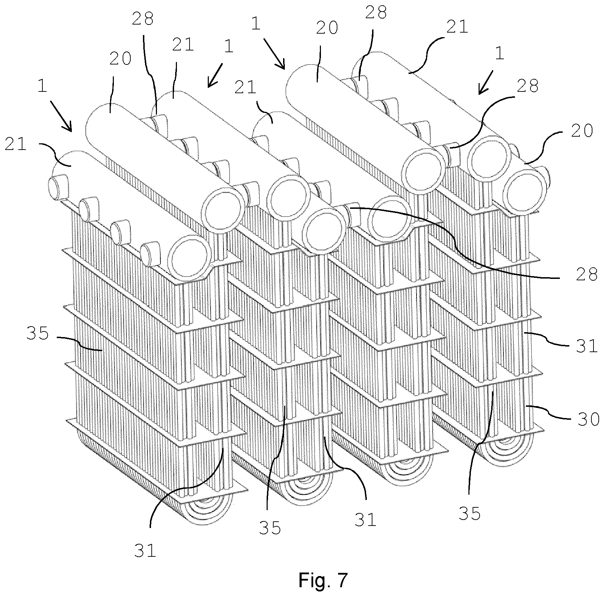

In **Fig. 7** a series of four heat exchanger modules 1 is shown. The modules 1 have a similar set-up as the modules of Fig. 1. However, in the example of Fig.7 adjacent modules 1 are flipped such that neighbouring straight sections 31, 35 of adjacently arranged modules 1 have a same length.

Accordingly, adjacent modules 1 have a long and a short inlet straight section 31 and a long and a short outlet straight section 35.

In Fig. 7, an inlet collector 20 is not connected with its adjacent outlet collector 21 through an end connector 7 as shown in Fig. 6. The collector tubes 20,21 comprise four radially, in the example shown in Fig.6 horizontally, arranged interface tubes 28. Each interface tube 28 of a collector 20,21 is connected to an interface tube 28 of an adjacent collector 21,20. The connection of interface tubes 28 to each other may be performed by welding or brazing, preferably by welding.

The interface tubes 28 may be connected with the respective collector tube 20,21 in a same manner as the U-tubes are connected to the collectors 20,21. Thus, preferably, through holes are provided in the tube walls of the collector tubes 20,21 and the interface tubes 28 are inserted into the through holes. A brazing joint between interface tube 28 and collector tube wall is preferably, realized in a same manufacturing step than the brazing of the ends of the U-tubes with the collector walls.

The modules 1 preferably comprise inlet collectors 20 and outlet collectors 21 having both ends closed.

The modules in the embodiment shown in Fig.7 use longer or shorter inlet sections of the U-tubes in alternating succession. The modules 1 are identical, but every-other module of the series is flipped.

With radially arranged connector tubes 28, equidistantly arranged over a length of a collector tube 20,21, a fluid flow is homogeneously distributed over the length of the collector tubes 20,21 and thus over the length of the heat exchanger module 1.

An example of a tubular heat exchanger comprises 24 heat exchanger modules arranged in two rows à 12 heat exchanger modules, with four times 40 U-tubes per heat exchanger module, preferably carbon dioxide (CO₂) as pressurized fluid with a pressure between 85 bar and 280 bar and a mass flow of 22.5kg/s.

In an example, a first fluid is supercritical CO₂ a pressure between 73 to 90 bar and a temperature between 31 degree and 70 degree Celsius.
Examples of U-tubes are:
- a total U-tube length of 1.55 meter, with each straight section extending over 0.75 meter and a diameter between 10 mm to 15 mm;
- Shortest distance between passages in collector tube wall for ends of U-tubes: 2 mm with a diameter of a U-tube of 13 mm;
- Outer diameter of U-tube 25 mm; inlet straight sections between 2 m and 2.5 m and between 1.8 m and 2.3 m for the outlet straight sections.

## Claims

1. Heat exchanger module (1) comprising several U-tubes (30) for a first fluid flow, the U-tubes (30) having two straight sections (31, 35) connected by a U-shaped portion (32), wherein the two straight sections (31, 35) of the U-tubes (30) have a different length,
**characterized in that** inlet ends (33) of the several U-tubes (30) are connected with an inlet collector tube (20) and outlet ends (34) of the several U-tubes (30) are connected with an outlet collector tube (21),
**and further characterized in that** a longitudinal axis of the inlet collector tube (20) and a longitudinal axis of the outlet collector tube (21) are arranged at different heights with respect to a height of the heat exchanger module (1).

2. Heat exchanger module (1) according to claim 1,
wherein the inlet ends (33) or the outlet ends (34) of the U-tubes (30) are connected with the tube wall (25) of the respective inlet or outlet collector tube (20, 21) over an entire wall thickness of the respective tube wall (25).

3. Heat exchanger module (1) according to any one of the preceding claims, wherein at least one of the inlet ends (33) of the U-tubes (30) or the outlet ends (34) of the U-tubes (30) comprise a brazed joint with the respective inlet or outlet collector tube (20, 21).

4. Heat exchanger module (1) according to any one of the preceding claims, wherein an end (22) of the inlet collector tube (20) or an end (22) of the outlet collector tube (21), preferably, an end (22) of the inlet collector tube (20) and an end (22) of the outlet collector tube (21), is closed.

5. Heat exchanger module (1) according to any one of the preceding claims, wherein the several U-tubes (30) are arranged in a regular array.

6. Heat exchanger module (1) according to claim 5,
wherein the inlet ends (33) of the several U-tubes (30) and the outlet ends (34) of the several U-tubes (30) are arranged in rows.

7. Heat exchanger module (1) according to claim 6,
wherein the inlet ends (33) and the outlet ends (34) of the several U-tubes (30) are each arranged in two to eight rows, preferably, in four to six rows.

8. Heat exchanger module (1) according to any one of the preceding claims, further comprising fins (4) arranged on an outside of the U-shaped tubes (30) for guiding a second fluid flow in the direction of the fins (4) along the outside of the heat exchanger module (1).

9. Method for manufacturing a heat exchanger module (1) according to any one of the preceding claims, the method comprising:
- providing a plurality of U-tubes (30);
- providing an inlet collector tube (20) and an outlet collector tube (21) with through passages (24) in a tube wall (25) of the inlet collector tube (20) and with through passages (24) in a tube wall (25) of the outlet collector tube (21);
- accommodating inlet ends (33) and outlet ends (34) of the U-tubes (30 in the through passages (24) in the respective tube walls (25) of the inlet collector tube (21) and the outlet collector tube (22);
- connecting the inlet ends (33) of the U-tubes (30) to the inlet collector tube (21) and connecting the outlet ends (34) of the U-tubes (30) to the outlet collector tube (21) in a fluid tight manner, thereby forming a heat exchanger module (1).

10. Method according to claim 9, further comprising
- applying brazing paste in the region of the through passages (24);
- heating the heat exchanger module (1) above a melting temperature of the brazing paste, letting the brazing paste enter the through passages (24), thereby forming a brazed joint between the ends (33, 34) of the U-tubes and the respective collector tubes (20, 21).

11. Method according to any one of claims 9 to 10, comprising drilling or laser cutting the through passages (24) in the tube walls (25) of the inlet collector tube (20) and the outlet collector tube (21).

12. Method according to any one of claim 10 to 11, wherein heating the heat exchanger module (1) comprises heating the heat exchanger module (1) in a vacuum furnace.

13. Tubular heat exchanger (8) comprising a housing (5) with a first fluid inlet (51) and a second fluid inlet (53) and a first fluid outlet (52) and a second fluid outlet (54), **characterized in that** a plurality of heat exchanger modules (1) according to any one of claims 1 to 9 are arranged in the housing (5), and wherein the plurality of heat exchanger modules (1) are connected with each other.

14. Tubular heat exchanger (8) according to claim 13, wherein the plurality of heat exchanger modules (1) is arranged in the housing (5) in two or more parallel rows, and wherein the first fluid inlet (51) comprises a flow splitter (55), which flow splitter (55) is connected with an inlet collector tube (20) of a first heat exchanger module (1) in each row of heat exchanger modules (1).

15. Tubular heat exchanger (8) according to any one of claims 13 to 14, wherein the housing (5) is elongate having a longitudinal axis and wherein longitudinal axes of straight sections (31) of U-tubes (30) of the heat exchanger modules (1) are arranged perpendicular to the longitudinal axis of the housing (5).

## Patentansprüche

1. Wärmetauschermodul (1), das mehrere U-Rohre (30) für einen ersten Fluidfluss umfasst, wobei die U-Rohre (30) zwei gerade Bereiche (31, 35) aufweisen, die durch einen U-förmigen Abschnitt (32) verbunden sind, wobei die zwei geraden Bereiche (31, 35) der U-Rohre (30) eine unterschiedliche Länge haben,
**dadurch gekennzeichnet, dass** Einlass-Enden (33) der mehreren U-Rohre (30) mit einem Einlass-Sammelrohr (20) verbunden sind und Auslass-Enden (34) der mehreren U-Rohre (30) mit einem Auslass-Sammelrohr (21) verbunden sind,
**und weiterhin dadurch gekennzeichnet, dass** eine Längsachse des Einlass-Sammelrohrs (20) und eine Längsachse des Auslass-Sammelrohrs (21) in Bezug auf eine Höhe des Wärmetauschermoduls (1) auf unterschiedlichen Höhen angeordnet sind.

2. Wärmetauschermodul (1) nach Anspruch 1, wobei die Einlass-Enden (33) oder die Auslass-Enden (34) der U-Rohre (30) mit der Rohrwand (25) des jeweiligen Einlass- oder Auslass-Sammelrohrs (20, 21) über eine gesamte Wanddicke der jeweiligen Rohrwand (25) verbunden sind.

3. Wärmetauschermodul (1) nach einem der vorangehenden Ansprüche, wobei mindestens eines der Einlass-Enden (33) der U-Rohre (30) oder der Auslass-Enden (34) der U-Rohre (30) eine Lötverbindung mit dem jeweiligen Einlass- oder Auslass-Sammelrohr (20, 21) aufweist.

4. Wärmetauschermodul (1) nach einem der vorangehenden Ansprüche, wobei ein Ende (22) des Einlass-Sammelrohrs (20) oder ein Ende (22) des Auslass-Sammelrohrs (21), vorzugsweise ein Ende (22) des Einlass-Sammelrohrs (20) und ein Ende (22) des Auslass-Sammelrohrs (21), geschlossen ist.

5. Wärmetauschermodul (1) nach einem der vorangehenden Ansprüche, wobei die mehreren U-Rohre (30) in einer regelmässigen Anordnung angeordnet sind.

6. Wärmetauschermodul (1) nach Anspruch 5, wobei die Einlass-Enden (33) der mehreren U-Rohre (30) und die Auslass-Enden (34) der mehreren U-Rohre (30) in Reihen angeordnet sind.

7. Wärmetauschermodul (1) nach Anspruch 6, wobei die Einlass-Enden (33) und die Auslass-Enden (34) der mehreren U-Rohre (30) jeweils in zwei bis acht Reihen, vorzugsweise in vier bis sechs Reihen, angeordnet sind.

8. Wärmetauschermodul (1) nach einem der vorangehenden Ansprüche, das ferner Finnen (4) umfasst, die an einer Aussenseite der U-förmigen Rohre (30) angeordnet sind, um einen zweiten Fluidfluss in Richtung der Finnen (4) entlang der Aussenseite des Wärmetauschermoduls (1) zu leiten.

9. Verfahren zur Herstellung eines Wärmetauschermoduls (1) nach einem der vorhergehenden Ansprüche, wobei das Verfahren umfasst:
- Bereitstellen von mehreren U-Rohren (30);
- Bereitstellen eines Einlass-Sammelrohrs (20) und eines Auslass-Sammelrohrs (21) mit Durchgängen (24) in einer Rohrwand (25) des Einlass-Sammelrohrs (20) und mit Durchgängen (24) in einer Rohrwand (25) des Auslass-Sammelrohrs (21);
- Aufnehmen von Einlass-Enden (33) und Auslass-Enden (34) der U-Rohre (30) in den Durchgängen (24) in den jeweiligen Rohrwänden (25) des Einlass-Sammelrohrs (21) und des Auslass-Sammelrohrs (22);
- Verbinden der Einlass-Enden (33) der U-Rohre (30) mit dem Einlass-Sammelrohr (21) und Verbinden der Auslass-Enden (34) der U-Rohre (30) mit dem Auslass-Sammelrohr (21) in fluiddichter Weise, wodurch ein Wärmetauschermodul (1) gebildet wird.

10. Verfahren nach Anspruch 9, weiterhin umfassend
- Auftragen von Lötpaste im Bereich der Durchgänge (24);
- Aufheizen des Wärmetauschermoduls (1) über eine Schmelztemperatur der Lötpaste, Eindringenlassen der Lötpaste in die Durchgänge (24), wodurch eine Lötverbindung zwischen den Enden (33, 34) der U-Rohre und den jeweiligen Sammelrohren (20, 21) gebildet wird.

11. Verfahren nach einem der Ansprüche 9 bis 10, umfassend das Bohren oder Laserschneiden der Durchgänge (24) in die Rohrwände (25) des Einlass-Sammelrohrs (20) und des Auslass-Sammelrohrs (21).

12. Verfahren nach einem der Ansprüche 10 bis 11, wobei Aufheizen des Wärmetauschermoduls (1) Aufheizen des Wärmetauschermoduls (1) in einem Vakuumofen umfasst.

13. Rohrwärmetauscher (8), umfassend ein Gehäuse (5) mit einem ersten Fluideinlass (51) und einem zweiten Fluideinlass (53) und einem ersten Fluidauslass (52) und einem zweiten Fluidauslass (54), **dadurch gekennzeichnet, dass** eine Mehrzahl von Wärmetauschermodulen (1) nach einem der Ansprüche 1 bis 9 in dem Gehäuse (5) angeordnet sind, und wobei die Mehrzahl von Wärmetauschermodulen (1) miteinander verbunden sind.

14. Rohrwärmetauscher (8) nach Anspruch 13, wobei die Mehrzahl von Wärmetauschermodulen (1) in dem Gehäuse (5) in zwei oder mehr parallelen Reihen angeordnet sind, und wobei der erste Fluideinlass (51) einen Flussteiler (55) umfasst, wobei der Flussteiler (55) mit einem Einlass-Sammelrohr (20) eines ersten Wärmetauschermoduls (1) in jeder Reihe von Wärmetauschermodulen (1) verbunden ist.

15. Rohrwärmetauscher (8) nach einem der Ansprüche 13 bis 14, wobei das Gehäuse (5) länglich ist und eine Längsachse aufweist und wobei Längsachsen von geraden Bereichen (31) von U-Rohren (30) der Wärmetauschermodule (1) senkrecht zur Längsachse des Gehäuses (5) angeordnet sind.

## Revendications

1. Module d'échangeur de chaleur (1) comprenant plusieurs tubes en U (30) pour un premier flux de fluide, les tubes en U (30) ayant deux portions droites (31, 35) reliées par une partie en U (32), dans lequel les deux portions droites (31, 35) des tubes en U (30) ont une longueur différente, **caractérisé en ce que** des extrémités d'entrée (33) des différents tubes en U (30) sont reliées à un tube collecteur d'entrée (20) et des extrémités de sortie (34) des différents tubes en U (30) sont reliées à un tube collecteur de sortie (21), et **caractérisé en outre en ce qu'**un axe longitudinal du tube collecteur d'entrée (20) et un axe longitudinal du tube collecteur de sortie (21) sont disposés à des hauteurs différentes par rapport à une hauteur du module d'échangeur de chaleur (1).

2. Module d'échangeur de chaleur (1) selon la revendication 1, dans lequel les extrémités d'entrée (33) ou les extrémités de sortie (34) des tubes en U (30) sont reliées à la paroi de tube (25) du tube collecteur d'entrée ou de sortie respectif (20, 21) sur une épaisseur de paroi entière de la paroi de tube respective (25).

3. Module d'échangeur de chaleur (1) selon l'une quelconque des revendications précédentes, dans lequel au moins l'une des extrémités d'entrée (33) des tubes en U (30) ou des extrémités de sortie (34) des tubes en U (30) comprend un assemblage brasé avec le tube collecteur d'entrée ou de sortie respectif (20, 21).

4. Module d'échangeur de chaleur (1) selon l'une quelconque des revendications précédentes, dans lequel une extrémité (22) du tube collecteur d'entrée (20) ou une extrémité (22) du tube collecteur de sortie (21), de préférence une extrémité (22) du tube collecteur d'entrée (20) et une extrémité (22) du tube collecteur de sortie (21), est fermée.

5. Module d'échangeur de chaleur (1) selon l'une quelconque des revendications précédentes, dans lequel les différents tubes en U (30) sont disposés en un ensemble régulier.

6. Module d'échangeur de chaleur (1) selon la revendication 5, dans lequel les extrémités d'entrée (33) des différents tubes en U (30) et les extrémités de sortie (34) des différents tubes en U (30) sont disposées en rangées.

7. Module d'échangeur de chaleur (1) selon la revendication 6, dans lequel les extrémités d'entrée (33) et les extrémités de sortie (34) des différents tubes en U (30) sont toutes disposées en deux à huit rangées, de préférence en quatre à six rangées.

8. Module d'échangeur de chaleur (1) selon l'une quelconque des revendications précédentes, comprenant en outre des ailettes (4) placées sur une partie extérieure des tubes en U (30) pour guider un deuxième flux de fluide dans la direction des ailettes (4) le long de l'extérieur du module d'échangeur de chaleur (1).

9. Procédé pour fabriquer un module d'échangeur de chaleur (1) selon l'une quelconque des revendications précédentes, le procédé comprenant les étapes suivantes :
- fournir une pluralité de tubes en U (30) ;
- fournir un tube collecteur d'entrée (20) et un tube collecteur de sortie (21) comportant des passages (24) dans une paroi de tube (25) du tube collecteur d'entrée (20) et comportant des passages (24) dans une paroi de tube (25) du tube collecteur de sortie (21) ;
- placer les extrémités d'entrée (33) et les extrémités de sortie (34) des tubes en U (30) dans les passages (24) des parois de tube respectives (25) du tube collecteur d'entrée (21) et du tube collecteur de sortie (22) ;
- relier les extrémités d'entrée (33) des tubes en U (30) au tube collecteur d'entrée (21) et relier les extrémités de sortie (34) des tubes en U (30) au tube collecteur de sortie (21) de manière étanche aux fluides, formant ainsi un module d'échangeur de chaleur (1).

10. Procédé selon la revendication 9, comprenant en outre les étapes suivantes :
- appliquer de la pâte à braser dans la région des passages (24) ;
- chauffer le module d'échangeur de chaleur (1) au-dessus d'une température de fusion de la pâte à braser, en laissant entrer la pâte à braser dans les passages (24), formant ainsi un assemblage brasé entre les extrémités (33, 34) des tubes en U et les tubes collecteurs respectifs (20, 21).

11. Procédé selon l'une quelconque des revendications 9 à 10, comprenant le fait de forer ou de couper au laser les passages (24) dans les parois de tube (25) du tube collecteur d'entrée (20) et du tube collecteur de sortie (21).

12. Procédé selon l'une quelconque des revendications 10 à 11, dans lequel le chauffage du module d'échangeur de chaleur (1) comprend le fait de chauffer le module d'échangeur de chaleur (1) dans un four à vide.

13. Echangeur de chaleur tubulaire (8) comprenant un boîtier (5) comportant une première entrée de fluide (51) et une deuxième entrée de fluide (53) et une première sortie de fluide (52) et une deuxième sortie de fluide (54), **caractérisé en ce qu'**une pluralité de modules d'échangeur de chaleur (1) selon l'une quelconque des revendications 1 à 9 sont placés dans le boîtier (5), et dans lequel les modules de la pluralité de modules d'échangeur de chaleur (1) sont reliés les uns aux autres.

14. Echangeur de chaleur tubulaire (8) selon la revendication 13, dans lequel la pluralité de modules d'échangeur de chaleur (1) est placée dans le boîtier (5) en deux rangées parallèles ou plus, et dans lequel la première entrée de fluide (51) comprend un diviseur de flux (55), lequel diviseur de flux (55) est relié à un tube collecteur d'entrée (20) d'un premier module d'échangeur de chaleur (1) dans chaque rangée de modules d'échangeur de chaleur (1).

15. Echangeur de chaleur tubulaire (8) selon l'une quelconque des revendications 13 à 14, dans lequel le boîtier (5) est de forme allongée ayant un axe longitudinal, et dans lequel les axes longitudinaux des portions droites (31) des tubes en U (30) des modules d'échangeur de chaleur (1) sont disposés perpendiculairement à l'axe longitudinal du boîtier (5).
